# FASCICULE DE BREVET EUROPEEN

(11) **EP 1 004 806 B1**
(45) Date de publication et mention de la délivrance du brevet: **22.02.2006**
(21) Numéro de dépôt: 99402724.1
(22) Date de dépôt: 03.11.1999
(51) Int. Cl.: F16L 27/08

(54) **Dispositif de raccordement tournant étanche autorisant des débattements importants**
Abgedichtete drehbare Verbindungsvorrichtung die Bewegungen erlaubt
Sealed rotary coupling allowing movements

(30) Priorité: 26.11.1998 FR 9814934
(43) Date de publication de la demande: 31.05.2000
(73) Titulaire: Institut Français du Pétrole, 92852 Rueil-Malmaison Cedex (FR)
(72) Inventeur: Garnier, Dominique, 78630 Orgeval (FR); Morlec, Jean, 44600 Saint Nazaire (FR)

(56) Documents cités:
- EP-A- 0 684 427
- AU-A- 1 760 167
- DE-C- 937 265
- FR-A- 2 755 493

## Description

La présente invention concerne un dispositif de raccordement tournant assurant l'étanchéité entre deux éléments à symétrie cylindrique tournant relativement l'un à l'autre, qui autorise des débattements relativement importants entre les deux éléments. Le dispositif selon l'invention convient particulièrement lorsque les sections des éléments s'emboîtant l'un dans l'autre sont relativement grands.

Le dispositif selon l'invention trouve des applications dans de nombreux domaines. A titre d'exemple non limitatif, on va en décrire une application au raccordement à un conduit extérieur d'un système tournant d'échange thermique et/ou d'incinération d'effluents gazeux chargés de substances polluantes tel que le système décrit dans les brevets EP 0.684.427 (US 5,643,538) ou EP 0.757.585 du demandeur.

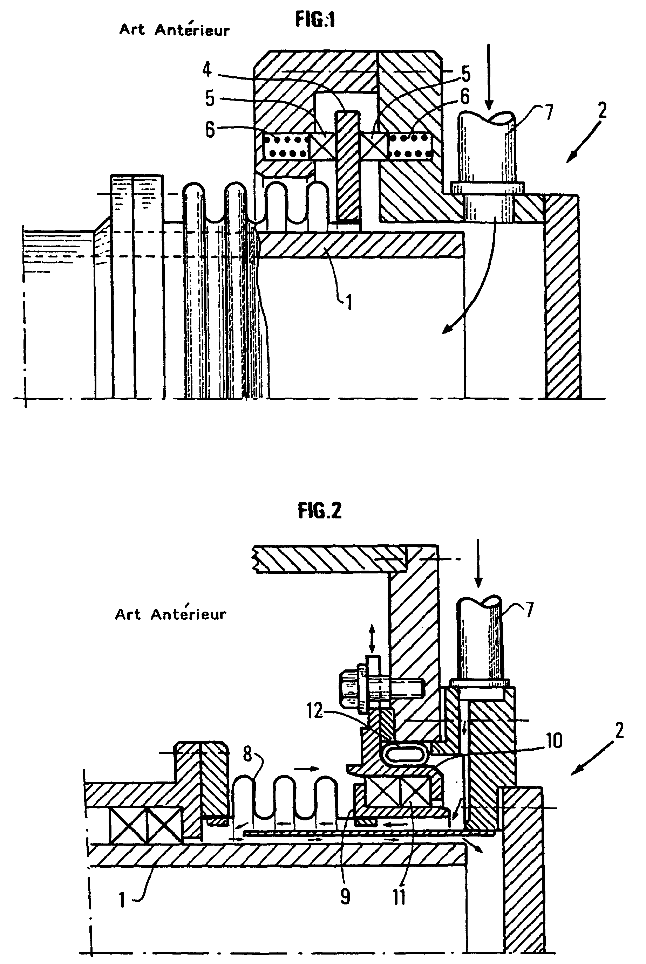

Un mode connu de raccordement d'une extrémité d'un élément tubulaire tournant 1 à un boîtier d'embout 2 est illustré schématiquement à la Fig.1. La partie terminale du tube 1 est solidaire extérieurement d'un soufflet terminé par une plaque annulaire d'embout 4. Cette plaque annulaire 4 tournant avec l'élément tubulaire 1, est en contact sur ses faces opposées avec des tresses d'étanchéité annulaires 5 pressés contre elles par des ressorts 6 logés dans des cavités ménagées dans le boîtier d'extrémité 2. Un conduit 7 débouchant à l'intérieur du boîtier 2, fait communiquer l'intérieur du tube 1 avec des moyens d'injection ou d'évacuation de fluides (non représentés).

L'utilisation d'un soufflet permet de compenser au moins en partie les débattements longitudinaux ou transversaux qui peuvent animer l'extrémité du tube tournant par rapport au boîtier d'extrémité fixe et de maintenir sensiblement l'étanchéité de la connexion. Cependant, la plaque annulaire 4 reste soumise malgré tout à certains déplacements transversaux. Les tresses d'étanchéité de ce fait sont soumises à des efforts de torsion et perdent rapidement leur efficacité. Des risques de grippage avec entraînement en rotation de la pièce fixe peuvent se produire.

Un autre agencement connu, illustré à la Fig. 2 et décrit dans le brevet FR-A- 2 755 493 du demandeur, permet un raccordement étanche d'un boîtier fixe 2 coiffant l'extrémité d'un élément tubulaire 1 tournant autour d'un axe de rotation. Il comporte un soufflet 8 fixé extérieurement à l'élément tubulaire, une bague annulaire 9 fixée à l'extrémité du soufflet, pourvue d'un épaulement radial, un bride annulaire 10 formant étrier reliée au boîtier fixe 2 et susceptible d'un certain débattement radial par rapport à lui, des joints d'étanchéité ou tresses annulaires 11 interposés entre la bague annulaire et la bride et des moyens élastiques 12 interposés entre le boîtier fixe et la bride, pour presser celle-ci contre le joint d'étanchéité.

La fiabilité des joints est ici bien meilleure car ils travaillent en compression quand la bague subit des déplacements radiaux et longitudinaux à l'extrémité du soufflet, consécutifs à de possibles excentrements ou élongations d'origine thermique de l'élément tubulaire. Un tel agencement convient pour le raccordement de tubes de diamètre relativement faible. Mais il perd de son intérêt pour des tubes de diamètre relativement grand en raison de la présence du soufflet qui doit être suffisamment renforcé pour résister au couple de torsion plus important qui s'exerce sur lui. Plus épais, il perd en flexibilité ce qui nuit à l'efficacité de l'agencement pour compenser les déplacements relatifs des éléments raccordés sans perte d'étanchéité.

Le dispositif de raccordement tournant selon l'invention assure l'étanchéité entre un élément intérieur et un élément extérieur de diamètre plus grand que celui de l'élément intérieur, les deux éléments étant coaxiaux, à symétrie cylindrique et tournant l'un relativement à l'autre, tout en autorisant des débattements longitudinaux et radiaux relativement importants entre les deux éléments. L'élément mobile peut être selon les cas, aussi bien l'élément intérieur l'élément extérieur étant fixe ou inversement l'élément extérieur, l'élément intérieur étant fixe.

Le dispositif comporte une virole et au moins un premier joint d'étanchéité annulaire solidaire de la virole, disposé entre elle et l'élément intérieur. Il est caractérisé en ce que la virole est rigide et disposée dans l'espace annulaire entre les deux éléments, le dispositif comportant également au moins un deuxième joint annulaire disposé entre deux parois opposées de la virole et de l'élément extérieur, toutes les deux perpendiculaires à l'axe de rotation, et des moyens pour appliquer les deux parois l'une contre l'autre par l'intermédiaire du deuxième joint annulaire avec une force d'application réglable.

De préférence, le dispositif comporte deux joints annulaires disposés dans la virole et maintenus espacés l'un de l'autre.

Suivant un mode de réalisation, les deux parois opposées sont constituées respectivement d'un rebord de l'élément extérieur et d'une collerette de la pièce tubulaire, et les moyens pour appliquer les deux parois l'une contre l'autre par l'intermédiaire du deuxième joint annulaire comportent une plaque annulaire, des ressorts et des moyens coopérant avec le dit rebord pour exercer une compression réglable (par vissage par exemple) sur les ressorts.

Suivant un mode de mise en oeuvre, l'élément intérieur est un conduit tubulaire fixe et l'élément extérieur est une couronne tournante avec une ouverture centrale sur laquelle s'emboîte le conduit tubulaire.

Le dispositif peut être appliqué par exemple à des transferts thermiques de fluides entre un appareil extérieur et la partie centrale de la couronne d'un système d'échange thermique et/ou d'incinération comportant une enceinte dans laquelle tourne la couronne contenant une masse à grande surface d'échange thermique et des moyens pour établir une circulation radiale permanente d'effluents gazeux d'une part entre des conduits d'amenée d'effluents et la zone centrale via un premier secteur angulaire limité de la couronne, et d'autre part entre la zone centrale et des conduits d'évacuation d'effluents via un deuxième secteur angulaire limité de la couronne.

Avec ce mode de raccordement, le conduit (élément intérieur) peut supporter des débattements relativement importants tant radialement que longitudinalement, sans altération des joints ni perte d'étanchéité.

D'autres caractéristiques et avantages du dispositif de raccordement selon l'invention, apparaîtront à la lecture de la description ci-après d'un exemple non limitatif de réalisation, appliqué au raccordement d'un conduit fixe sur un élément tournant, en se référant aux dessins annexés où :
- la Fig.1 montre, vu en coupe partielle, un dispositif connu de raccordement d'un élément tournant à un autre élément fixe ;
- la Fig.2 montre, vu en coupe partielle, un autre dispositif connu de raccordement d'un élément tournant à un autre élément fixe ;
- la Fig.3 montre une vue en coupe partielle schématique du dispositif de raccordement perfectionné selon l'invention ;
- la Fig.4 montre en coupe partielle suivant F, un mode préféré de réalisation d'une bague utilisée pour plaquer des joints dans le dispositif de la Fig.3 ; et
- la Fig.5 montre un exemple d'application du mode de raccordement des Fig.3, 4 au raccordement d'un conduit fixe sur l'ouverture centrale d'une couronne tournante d'un système d'échange et/ou d'épuration thermique.

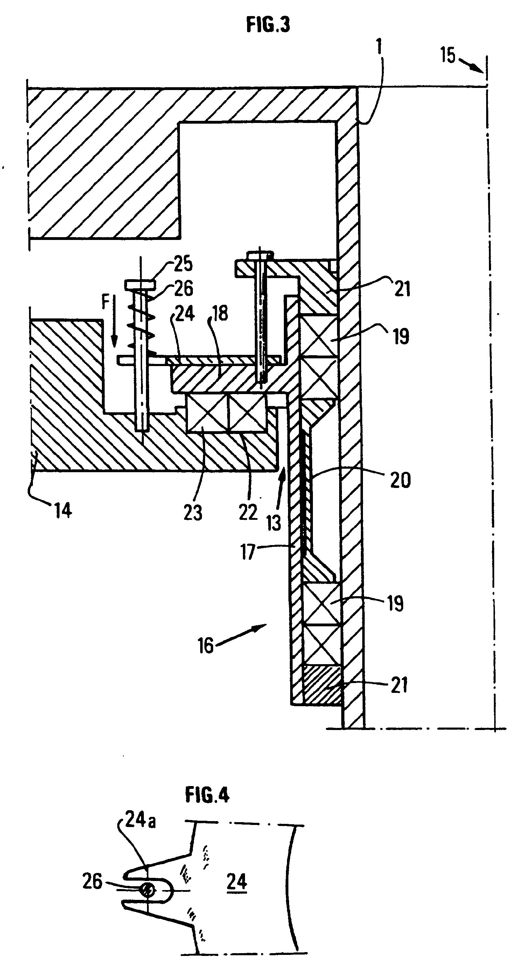

Le dispositif de raccordement permet d'assurer l'étanchéité autour d'un tube fixe 1 pénétrant par l'ouverture centrale cylindrique 13 d'un élément 14 tournant autour d'un axe vertical 15 et susceptible de déplacements radiaux et/ou longitudinaux relativement au tube 1, en raison de possibles décentrements ou de dilatations thermiques. La section du tube 1 est inférieure à celle de l'ouverture 13. Dans l'espace annulaire autour du tube 1, est disposée une virole 16 de section intermédiaire entre celle du tube et celle de l'ouverture 13, qui comprend une partie tubulaire 17 terminée par une collerette 18. Dans l'espace annulaire entre le tube 1 et la virole 16 sont disposées deux tresses d'étanchéité 19 maintenues à distance l'une de l'autre par une bague d'entretoise 20. Deux bagues 21, en bronze par exemple, sont fixées aux extrémités opposées de la partie tubulaire 17 de la virole, pour maintenir en place les deux tresses 19. Le rebord intérieur de l'élément 14 comporte un rail creux 22 pour un joint annulaire 23. La collerette 18 de la virole vient en appui contre le joint annulaire 23. Elle est maintenue plaquée contre lui par une bague annulaire 24 pourvue de doigts fendus 24A (Fig.4). La bague 24 est immobilisée en rotation par des goujons 25 traversant les doigts 24A et vissés dans l'élément 14. La force d'appui de la bague 24 est obtenue par des ressorts 26 plus ou moins comprimés par vissage des goujons 25. La virole 16 est de ce fait entraînée en rotation par l'élément 14 et elle est maintenue écartée du tube fixe 1 par les tresses 19 interposées.

Le mode de fixation de la virole par pincement autorise un certain débattement radial de la virole par rapport à l'ouverture 13 de l'élément 14. Un éventuel glissement axial du tube 1 relativement à l'élément 14 est également possible. Les débattements radiaux et axiaux n'occasionnent aucun dommage pour les tresses 19 et le joint annulaire qui sont étroitement tenues en place respectivement dans la virole 16 et dans le rail circulaire 22. Les doigts de fixation 24A sont dimensionnés de façon à se rompre si le couple appliqué par l'élément fixe (le tube 1) à la virole 16 vient accidentellement à dépasser un certain seuil, ce qui constitue une sécurité.

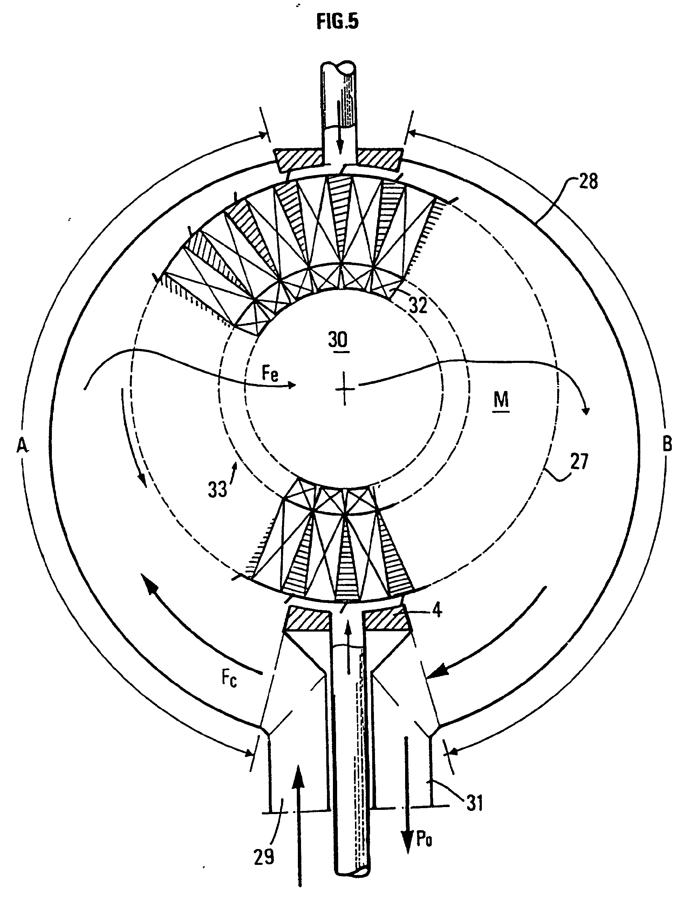

Ce mode de raccordement peut être utilisé par exemple dans un système d'échange ou d'épuration thermique tel que celui schématisé à la Fig.5. Ce système comporte une couronne 27 d'axe vertical pouvant tourner à l'intérieur d'une enceinte 28. La couronne 27 est cloisonnée intérieurement et contient une masse M à grande surface d'échange thermique. On établit une circulation radiale permanente d'effluents gazeux d'une part entre des conduits 29 d'amenée d'effluents et la zone centrale 30 via un premier secteur angulaire limité A de la couronne, et d'autre part entre la zone centrale et des conduits 31 d'évacuation d'effluents via un deuxième secteur angulaire limité B de la couronne. Un réacteur thermique 32 de type à lit catalytique par exemple, peut être disposé dans la zone centrale ou contre la face intérieure 33 de la couronne pour l'incinération de composés organiques volatils (COV). A la zone centrale 30 de la couronne tournante 27, on peut raccorder un conduit fixe 34 servant par exemple à canaliser des flux gazeux croisés quand le système est utilisé comme échangeur thermique comme décrit dans le brevet précité EP 0.684.427 du demandeur, ou bien encore à communiquer avec un appareil d'appoint extérieur à l'enceinte, qu'il s'agisse d'un brûleur ou d'une source d'air frais par exemple pour ramener la température de la réaction dans une marge de variation de température fixée.

La section transversale du conduit 34 est souvent relativement grande pour canaliser les débits gazeux importants. Son mode de raccordement avec la zone centrale doit s'accommoder de débattements aussi bien axiaux que radiaux du fait de possibles décentrements ou de dilatations d'origine thermique, ceci dans une gamme étendue de variation de température. Le dispositif de raccordement décrit est particulièrement bien adapté à cet effet et son efficacité et sa fiabilité ont été éprouvées.

## Revendications

1. Dispositif de raccordement tournant étanche comprenant un élément intérieur (1) et un élément extérieur (14, 27) de diamètre plus grand, les deux éléments étant coaxiaux, à symétrie cylindrique et tournant l'un relativement à l'autre, ledit dispositif autorisant des débattements longitudinaux et radiaux relativement importants entre les deux éléments, **caractérisé en ce que** le dispositif comporte également dans un espace annulaire défini entre les deux éléments (1, 14, 27), une virole (16) constituée d'une partie tubulaire (17) terminée perpendiculairement par une collerette (18), au moins un premier joint d'étanchéité annulaire (19) disposé entre ladite partie tubulaire (17) et ledit élément intérieur (1), au moins un deuxième joint annulaire (23) disposé entre une paroi de la collerette (18) et une paroi opposée (22) de l'élément extérieur (14), ces deux parois étant perpendiculaires à l'axe de rotation, et des moyens (24-26) pour appliquer les deux parois l'une contre l'autre avec une force d'application réglable.

2. Dispositif selon la revendication 1, **caractérisé en ce qu'**il comporte deux joints annulaires (19) espacés l'un de l'autre par une entretoise (20).

3. Dispositif selon l'une des revendications précédentes, **caractérisé en ce que** les deux parois opposées sont constituées respectivement d'un rebord (22) de l'élément extérieur (14) et de la collerette (18), et les moyens pour appliquer les deux parois l'une contre l'autre par l'intermédiaire du deuxième joint annulaire (23) comportent une plaque annulaire (24), des ressorts (26) et des moyens coopérant avec le dit élément (14) pour exercer une compression réglable sur les ressorts (26).

4. Dispositif selon l'une des revendications précédentes, **caractérisé en ce que** l'élément intérieur (1) comporte un conduit tubulaire fixe et l'élément extérieur comporte une couronne (27) tournant autour d'un axe vertical avec une ouverture centrale dans laquelle s'emboîte le conduit tubulaire (1).

5. Dispositif selon l'une des revendications 1 à 3, **caractérisé en ce que** l'élément intérieur (1) comporte un conduit tubulaire tournant autour d'un axe vertical et l'élément extérieur comporte une couronne (27) fixe avec une ouverture centrale dans laquelle s'emboîte le conduit tubulaire tournant (1).

6. Application du dispositif selon la revendication 4, à un transfert thermique de fluides entre un appareil extérieur et la partie centrale (30) de la couronne (27) d'un système d'échange thermique et/ou d'incinération comportant une enceinte (28) dans laquelle tourne la couronne (27) contenant une masse à grande surface d'échange thermique et des moyens pour établir une circulation radiale permanente d'effluents gazeux d'une part entre des conduits (29) d'amenée d'effluents et la zone centrale (30) via un premier secteur angulaire limité (A) de la couronne, et d'autre part entre la zone centrale et des conduits (31) d'évacuation d'effluents via un deuxième secteur angulaire limité (B) de la couronne.

## Patentansprüche

1. Vorrichtung für eine drehende, dichte Verbindung, umfassend ein Innenelement (1) und ein Außenelement (14, 27) ;mit größerem Durchmesser, wobei die beiden Elemente koaxial, mit zylindrischer Geometrie und gegeneinander drehend sind, wobei die Vorrichtung longitudinale und radiale, relativ große Ausfederungen zwischen den beiden Elementen zulässt, **dadurch gekennzeichnet, dass** die Vorrichtung auch in einem ringförmigen Raum, der zwischen den beiden Elementen (1, 14, 27) definiert ist, einen Mantel (16) umfasst, bestehend aus einem Rohrteil (17), das senkrecht durch einen Kragen (18) endet, wenigstens eine erste Ringdichtungs-Verbindung (19), die zwischen dem Rohrteil (17) und dem Innenelement (1) angeordnet ist, wenigstens eine zweite Ringverbindung, (23), die zwischen der Wand des Kragens (18) und der gegenüber stehenden Wand (22) des Außenelements (14) angeordnet ist, wobei die beiden Wände senkrecht zur Rotationsachse sind, und Mittel (24, 26), um die beiden Wände gegeneinander mit einer regelbaren Auflagekraft anzusetzen.

2. Vorrichtung nach Anspruch 1, **dadurch gekennzeichnet, dass** sie zwei Ringverbindungen (19) umfasst, die voneinander durch ein Zwischenstück (20) beabstandet sind.

3. Vorrichtung nach einem der vorhergehenden Ansprüche, **dadurch gekennzeichnet, dass** die beiden gegenüberstehenden Wände jeweils aus einem Rand (22) des Außenelements (14) und des Kragens (18) bestehen und die Mittel, um die beiden Wände gegeneinander mit einer zweiten Ringverbindung (23) anzusetzen, eine ringförmige Platte (24), Federn (26) und Mittel umfassen, die mit dem Element (14) zusammenwirken, um eine regelbare Kompression auf die Federn (26) auszuüben.

4. Vorrichtung nach einem der vorhergehenden Ansprüche, **dadurch gekennzeichnet, dass** das Innenelement (1) eine feste Rohrleitung umfasst und das Außenelement einen Kranz (27) umfasst, der sich um eine Vertikalachse mit einer zentralen Öffnung dreht, in die sich die Rohrleitung (1) einfügt.

5. Vorrichtung nach einem der Ansprüche 1 bis 3, **dadurch gekennzeichnet, dass** das Innenelement (1) eine Rohrleitung umfasst, die sich um eine Vertikalachse dreht und das Außenelement einen Kranz (27) umfasst, der fest mit einer Zentralöffnung ist, in die sich die drehende Rohrleitung (1) einfügt

6. Verwendung der Vorrichtung nach Anspruch 4 bei einer Wärmeüberführung von Fluiden zwischen einer äußeren Vorrichtung und dem Zentralteil (30) des Kranzes (27) eines Wärmetausch- und/oder Verbrennungssystems, umfassend einen Innenraum (28), in dem sich der Kranz (27) dreht, der eine Masse mit großer Wärmetauschoberfläche enthält und Mittel, um eine radiale permanente Zirkulation von Gasströmen einerseits unter den Leitungen (29) zur Zufuhr von Abströmen und der Zentralzone (30) über einen ersten Winkelsektor (A) zu etablieren, der begrenzt ist vom Kranz und andererseits zwischen der Zentralzone und den Leitungen (31) zum Abziehen von Abströmen über einen zweiten Winkelsektor (B), der begrenzt ist von dem Kranz.

## Claims

1. Sealed rotary coupling device comprising an inner element (1) and an outer element (14, 27) of larger diameter, the two elements being coaxial, with cylindrical symmetry and rotating one relative to the other, the said device allowing relatively large longitudinal and lateral movements between the two elements, **characterised by** the fact that the device also includes an annular space defined between the two elements (1, 14, 27), a sleeve (16) formed of a tubular part (17) perpendicularly terminated by a collar (18), at least a first annular seal (19) arranged between the said tubular part (17) and the said inner element (1), at least a second annular seal (23) arranged between a wall of the collar (18) and an opposed wall (22) of the outer element (14), these two walls being perpendicular to the axis of rotation, and means (24-26) for applying the two walls one against the other with an adjustable application force.

2. Device as described in claim 1, **characterised by** the fact that it includes two annular seals (19) spaced one from the other by a distance-piece (20).

3. Device as described in one of the preceding claims, **characterised by** the fact that the two opposed walls are respectively formed of a flange (22) of the tubular element (14) and the collar (18), and the means for applying the two walls one against the other via the second annular seal (23) include an annular plate (24), springs (26) and means co-operating with the said element (14) to apply an adjustable compression to the springs (26).

4. Device as described in one of the preceding claims, **characterised by** the fact that the inner element (1) includes a fixed tubular pipe and the outer element includes a ring (27) rotating about a vertical axis with a central opening into which the tubular pipe (1) fits.

5. Device as described in one of claims 1 to 3, **characterised by** the fact that the inner element (1) includes a tubular pipe rotating about a vertical axis and the outer element includes a fixed ring (27) with a central opening into which the rotating tubular pipe (1) fits.

6. Application of the device as described in claim 4 to thermal transfer of fluids between an external apparatus and the central part (30) of the ring (27) of a heat-exchange and/or incineration system including a chamber (28) in which rotates the ring (27) containing a mass with a large heat-exchange surface and means for establishing a continuous radial circulation of gaseous effluents on the one hand between pipes (29) supplying effluents and the central zone (30) via a first limited angular sector (A) of the ring, and on the other between the central zone and pipes (31) for removal of effluents via a second limited angular sector (B) of the ring.
